# EUROPÄISCHE PATENTSCHRIFT

(11) **EP 3 710 314 B1**
(45) Veröffentlichungstag und Bekanntmachung des Hinweises auf die Patenterteilung: **21.09.2022**
(21) Anmeldenummer: 18795492.0
(22) Anmeldetag: 25.10.2018
(51) Int. Cl.: B60R 13/02

(54) **VERKLEIDUNGSSYSTEM, VERFAHREN ZUR HERSTELLUNG EINER VERKLEIDETEN KRAFTFAHRZEUGKAROSSERIE UND KRAFTFAHRZEUG**
TRIMMING SYSTEM, METHOD FOR PRODUCING A TRIMMED MOTOR VEHICLE BODY, AND MOTOR VEHICLE
SYSTÈME D'HABILLAGE, PROCÉDÉ DE FABRICATION D'UNE CARROSSERIE DE VÉHICULE AUTOMOBILE MUNIE D'UN HABILLAGE ET VÉHICULE AUTOMOBILE

(30) Priorität: 16.11.2017 DE 102017220496
(43) Veröffentlichungstag der Anmeldung: 23.09.2020
(73) Patentinhaber: Volkswagen Aktiengesellschaft, 38440 Wolfsburg (DE)
(72) Erfinder: RÖSEMANN, Harald, 38518 Gifhorn (DE); PASCHKE, Jennifer, 38442 Wolfsburg (DE); KAMP, Marcus, 38554 Weyhausen (DE)
(86) Internationale Anmeldenummer: PCT/EP2018/079266
(87) Internationale Veröffentlichungsnummer: WO 2019/096558

(56) Entgegenhaltungen:
- EP-A2- 1 190 909
- DE-A1- 10 200 888
- DE-A1-102008 047 693
- DE-A1-102010 005 026
- JP-A- H1 178 613

## Beschreibung

Die Erfindung betrifft ein Verkleidungssystem zum zumindest bereichsweisen Verkleiden einer Kraftfahrzeugsäule, insbesondere einer A-Säule, ein Verfahren zur Herstellung einer verkleideten Kraftfahrzeugkarosserie und ein Kraftfahrzeug, insbesondere einen Personenkraftwagen.

In der industriellen Produktion ist die Anzahl der unterschiedlichen, zur Herstellung eines Produktes genutzten Bauteile ein wesentlicher Kostenfaktor. Jedes zusätzliche Bauteil führt zu höheren Werkzeug-, Material-, Logistik-, sowie Montagekosten. Aus diesem Grund erwächst häufig die Bestrebung, Bauteile einzusparen, ohne dass dabei Einbußen hinsichtlich der Funktionalität in Kauf genommen werden müssen. Eine Möglichkeit dazu bietet die Modularisierung von Baugruppen. Hierbei werden einzelne Bauteile derart ausgestaltet, dass sie mit mehreren verschiedenen Bauteilen kombinierbar sind. Auf diese Weise sind beispielsweise Bauteile als Gleichteile in unterschiedlichen Produkten nutzbar. Die Modularisierung bringt weiterhin Individualisierungsmöglichkeiten mit sich, da ein einzelnes modulares Bauteil entsprechend seiner Eigenschaften ausgewählt und eingebaut werden kann.

Es existieren unterschiedliche Verkleidungskonzepte für Kraftfahrzeugsäulen. Typischerweise sind Kraftfahrzeugsäulen zum Fahrzeuginnenraum hin mittels mehrerer gegebenenfalls aneinander befestigter Verkleidungsteile verkleidet. Diese sind auf geeignete Weise an der Fahrzeugsäule oder anderen Kraftfahrzeug-Innenraumteilen befestigt. Dabei ist eine typische Anforderung die Minimierung von Spalten, sodass ein optisch ansprechendes, gleichmäßiges Fugenbild erreicht wird.

Die DE 102 00 888 A1 beschreibt eine Abdeckung für einen Zwischenraum zwischen einem Türpfosten und der Seitenfläche einer Instrumententafel eines Fahrzeugs. Diese verkleidet weiterhin den Türpfosten auf der Höhe der Instrumententafel und ist derart ausgestaltet, dass sie bei geöffneter Tür den sichtbaren Fugenspalt zwischen der Instrumententafel und dem Türpfosten abdeckt. Die Abdeckung , die dem Oberbegriff des Anspruchs 1 entspricht, kann an dem seitlichen Ende der Instrumententafel befestigt sein und dieses verkleiden.

Die DE 10 2010 005 026 A1 offenbart eine Aufnahmevorrichtung für eine A-Säulenverkleidung eines Kraftfahrzeugs, die angrenzend an einen seitlichen Randbereich einer Instrumententafel angeordnet ist. Die Verkleidung ist mit ihrem unteren Randbereich in einem elastischen Montageteil eingesteckt gehalten. Dieses ist in eine U-förmige Nut eines Defrostkanals einsetzbar. Auf diese Weise wird eine Geräuschentkopplung zwischen der Verkleidung und einer angrenzenden Lautsprecherblende und einem Luftausströmer möglich.

EP 1 190 909 B1 beschreibt ein Befestigungssystem mit einer Säulenverkleidung für den Innenraum eines Kraftfahrzeugs. Die Säulenverkleidung umfasst ein Verkleidungsteil zum Abdecken einer Säule sowie Mittel zum Toleranzausgleich des Spaltes am Übergang zwischen der Säulenverkleidung und der Schalttafel des Kraftfahrzeugs. Diese können Führungseingreifmittel mit Verdickungen oder Rippen zum Eingriff in eine Führungsnut aufweisen, die in der Schalttafel angeordnet ist. Auf diese Weise wird ein ansprechendes äußeres Erscheinungsbild ohne sichtbare Spalte zwischen den Bauteilen erreicht.

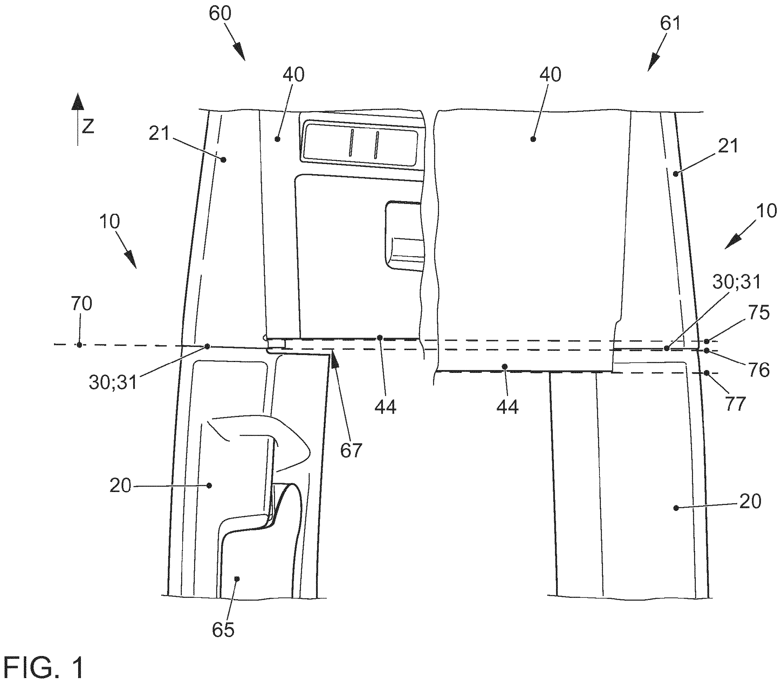

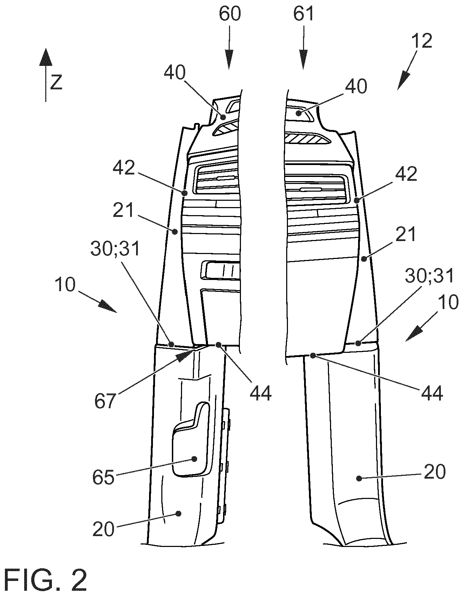

Einzelne Aspekte aus dem Stand der Technik bekannter Verkleidungssysteme sind in den Figuren 1 und 2 dargestellt, die jeweils ein Verkleidungssystem 10 sowie eine Instrumententafel 40 im montierten Zustand zeigen. Zur Verbesserung der Übersichtlichkeit sind jeweils die mittleren Bereiche der Instrumententafeln 40 ausgeschnitten und nur die jeweiligen seitlichen Übergangsbereiche zwischen den Instrumententafeln 40 und den entsprechenden Teilen der Verkleidungssysteme 10 an den rechten und linken Seiten der Instrumententafel 40 dargestellt.

In Figur 1 besteht die Verkleidung einer jeweiligen A-Säule aus einem Mittelteil 21 und einem darunter angeordneten Unterteil 20. Diese sind mittels einer Trennfuge 70 voneinander getrennt. Die obere Kante des Unterteils 20 sowie die untere Kante des Mittelteils 21 weisen jeweilige Anlagebereiche 30, 31 auf, die aneinander anliegen, wodurch das Unterteil 20 und das Mittelteil 21 gemeinsam eine geschlossene Kontur ausbilden, die mit verschiedenen Fugenarten, gestoßen oder überlappend, dargestellt werden kann.

Es zeigt sich, dass die Instrumententafel 40 auf der Fahrerseite 60 eine höhere Unterkante bzw. Unterseite, also ein höheres z-Niveau, wie mittels der Richtung z gekennzeichnet, aufweist, als auf der Beifahrerseite 61. Auf der Fahrerseite 60 befindet sich die Unterkante der Instrumententafel 40 auf dem oberen Höhenniveau 75, während sich diese auf der Beifahrerseite 61 auf dem unteren Höhenniveau 77 befindet. Aus diesem Grund müsste, um das Entstehen eines sichtbaren Spalts zwischen dem Unterteil 20 und der Instrumententafel 40 zu verhindern, die Trennfuge 70 rechts und links auf unterschiedlichen Höhenniveaus angeordnet werden. Dies würde in der Notwendigkeit resultieren, bezüglich ihrer Höhen unterschiedlich ausgestaltete Unterteile 20 anzuordnen.

Bei wunschgemäßer Realisierung einer Trennfuge auf demselben Höhenniveau fahrerseitig 60 und beifahrerseitig 61 muss das dritte untere Höhenniveau 77 gewählt werden, wobei auf der Fahrerseite 60 sich ein deutlich sichtbarer Spalt 67 zwischen dem Unterteil 20 und der Instrumententafel 40 bildet.

Eine Verwendung gleichartiger Unterteile 20 auch für unterschiedliche Instrumententafeln, deren Unterkante sich beispielsweise auf dem mittleren Höhenniveau 76 befinden kann, ist somit nicht möglich.

Figur 2 zeigt eine ähnliche Ausgestaltung. Das dargestellte Bauteilsystem 12 umfasst die Instrumententafel 40 sowie auf jeder Seite rechts und links jeweils ein erstes Mittelteil 21 und ein Unterteil 20 zur Verkleidung der A-Säule. Am Unterteil 20 der Fahrerseite 60 ist ein Motorhaubenöffner 65 angeordnet. Auch hier ist das Höhenniveau der Unterkante 44 der Instrumententafel 40 auf der Fahrerseite 60 höher als auf der Beifahrerseite 61. Gleichzeitig sind hier rechts und links jeweils symmetrische Unterteile 20 angeordnet. Es wird deutlich, dass sich auf der Fahrerseite 60 ein sichtbarer Spalt 67 ausbildet.

Es ist die Aufgabe der Erfindung, ein Verkleidungssystem und ein Verfahren zur Herstellung einer verkleideten Karosserie zur Verfügung zu stellen, welche die Verkleidung von Kraftfahrzeugsäulen auf besonders einfache, kostengünstige und variable Weise ermöglichen.

Die Aufgabe wird gelöst durch das Verkleidungssystem gemäß Anspruch 1 und das Verfahren zur Herstellung einer verkleideten Karosserie gemäß Anspruch 5. Ausgestaltungen des Verkleidungssystems sind in den Unteransprüchen 2-4 angegeben.

Ein erster Aspekt der Erfindung ist ein Verkleidungssystem mit den Merkmalen des Anspruchs 1.

Unterteil und Mittelteil sind Elemente der Kraftfahrzeug-Säulenverkleidung. Das Unterteil ist derart ausgestaltet, dass es mit verschiedenen Mittelteilen kombinierbar ist. Dazu ist die Trennfuge zwischen Unterteil und Mittelteil derart gewählt, dass eine Instrumententafel eines Kraftfahrzeugs, welche neben dem Mittelteil bzw. insbesondere zwischen zwei Mittelteilen in einem Kraftfahrzeug anzuordnen ist, das Mittelteil bzw. die Mittelteile kontaktiert bzw. in einem minimalen Abstand zu diesen angeordnet oder anordbar ist. Der minimale Abstand ist ein solcher in einer Größenordnung unterhalb 1cm, insbesondere von wenigen Millimetern. Es ist möglich, dass das Unterteil und das erste bzw. zweite Mittelteil in einem geringen und typischerweise konstanten Abstand entlang zumindest einer ihrer jeweiligen Längserstreckungsrichtungen zueinander positioniert sind. Das Unterteil bzw. die Unterteile kontaktieren jedoch nicht die Instrumententafel bzw. sind in einem größeren als dem minimalen Abstand von dieser angeordnet.

Das Unterteil und das jeweilige Mittelteil weisen jeweils einen Anlagebereich auf, wobei der Anlagebereich des Unterteils komplementär zum Anlagebereich des jeweiligen Mittelteils ausgebildet ist und umgekehrt. Kleinere Abweichungen der komplementären Anlagebereiche in Form und/ oder Größe sind zulässig. Beispielsweise ist gemeint, dass jeweils eine Kante des Unterteils und des jeweiligen Mitteilteils die komplementäre Form aufweisen. Diese Kanten sind dazu eingerichtet, aneinander anzuliegen bzw. in dem genannten minimalen Abstand zueinander angeordnet zu sein, sodass die jeweilige, zumindest nahezu geschlossene Kontur ausgebildet wird. Mit anderen Worten liegen die jeweiligen komplementären Anlagebereiche des Unterteils und des ersten Mittelteils bzw. des Unterteils und des zweiten Mittelteils im Wesentlichen aneinander an oder sind minimal voneinander beabstandet.

Die erfindungsgemäße Anordnung des Unterteils und des jeweiligen Mittelteils ist insbesondere bei bestimmungsgemäßer Anordnung eines Teils des Verkleidungssystems in einem Kraftfahrzeug, zu realisieren. Bei bestimmungsgemäßer Anordnung werden ausschließlich das Unterteil und eines der Mittelteile in einem Kraftfahrzeug angeordnet, während das andere Mittelteil - gemeinsam mit einem weiteren Unterteil - zur Montage in einem anderen Kraftfahrzeug vorgesehen ist. Die beiden Kraftfahrzeuge weisen dabei unterschiedlich geformte bzw. ausgestaltete Instrumententafeln auf, die jeweils von den unterschiedlich ausgestalteten Mittelteilen eingefasst bzw. einfassbar sind.

Erfindungsgemäß werden die unterschiedlichen Formen der Instrumententafeln mittels der entsprechend unterschiedlich geformten jeweiligen Mittelteile verkleidet, sodass ein gemeinsames Unterteil genutzt werden kann. Insbesondere sind das Unterteil und ein jeweiliges Mittelteil derart ausgestaltet, dass mittels ihnen ein im Wesentlichen nahtloser, optisch ansprechender Übergang zwischen Mittelteil und Unterteil realisierbar ist.

Das Unterteil und ein jeweiliges Mittelteil dienen typischerweise der innenliegenden, also dem Kraftfahrzeuginnenraum zugewandten, Verkleidung der A-Säule. Das Unterteil ist insbesondere derart ausgestaltet, dass es unterhalb des Mittelteils anzuordnen ist. Oberhalb des Mittelteils kann sich ein Oberteil zum zumindest bereichsweisen Verkleiden eines oberen Bereichs der Kraftfahrzeugsäule erstrecken. Die zum zweiten Mittelteil komplementäre Form des Unterteils entspricht insbesondere dessen zum ersten Mitteilteil komplementärer Form. Das erste und das zweite Mittelteil unterscheiden sich beispielsweise in einer oder mehreren der folgenden Eigenschaften: Größe, Form, Bauteilhöhe, Bauteilbreite, Ausgestaltung des Anlagebereichs, Position bzw. Höhenniveau der jeweiligen Unterkante im bestimmungsgemäß montierten Zustand, Position der in Richtung auf die Instrumententafel weisenden Seitenkante im bestimmungsgemäß montierten Zustand.

In einer Ausgestaltung des Verkleidungssystems sind das Unterteil und ein jeweiliges Mittelteil derart ausgestaltet, dass das Unterteil mit jeweils einem des ersten Mittelteils und des zweiten Mittelteils derart verbunden oder verbindbar ist, dass die jeweiligen komplementären Anlagebereiche des Unterteils und des ersten Mittelteils bzw. des Unterteils und des zweiten Mittelteils im Wesentlichen aneinander anliegen oder minimal voneinander beabstandet sind.

Die Befestigung kann im komplementären Anlagebereich realisiert sein. Die Verbindung erfolgt derart, dass die jeweiligen komplementären Anlagebereiche gemeinsam die zumindest nahezu geschlossen Kontur ausbilden. Beispielsweise kann im komplementären Anlagebereich eine Überlappung des Unterteils mit dem jeweiligen Mittelteil realisiert sein. Diese Ausgestaltung bringt den Vorteil mit sich, dass die Bauteile aneinander und in Bezug zueinander fixiert sind, sodass ihre jeweiligen Positionen dauerhaft und fest sind.

Eine weitere Ausgestaltung des Verkleidungssystems ist dadurch gekennzeichnet, dass das Unterteil zwei in einem Winkel α zwischen 80° und 135°, insbesondere zwischen 90° und 120°, zueinander ausgerichtete Abschnitte umfasst. Der Winkel α wird in einer senkrecht zu einer Längserstreckung des Unterteils angeordneten Schnittebene gemessen. Somit ist bei bestimmungsgemäßer Anordnung des Unterteils in einem Kraftfahrzeug ein erster Abschnitt des Unterteils im Wesentlichen entlang der Fahrzeugquerrichtung ausgerichtet. Ein zweiter Abschnitt des Unterteils erstreckt sich mit einer Komponente seiner Erstreckungsrichtung entlang der Fahrzeuglängsrichtung.

Der erste und der zweite Abschnitt des Unterteils können eine gemeinsame Begrenzungskante ausbilden. Insbesondere wird der Anlagebereich des Unterteils durch eine gemeinsame Begrenzungskante des ersten und zweiten Abschnitts ausgebildet. Diese Begrenzungskante kann kontinuierlich ausgestaltet sein und derart die beiden Abschnitte ohne eine dazwischen liegende Unterbrechung miteinander verbinden.

Beide Abschnitte des Unterteils sind miteinander verbunden. Beispielsweise kann das Unterteil einen Knick aufweisen, welcher den Winkel α definiert. Es kann zwischen den Abschnitten des Unterteils eine Kante angeordnet sein, die beispielsweise abgerundet ist. Die Abschnitte müssen nicht notwendigerweise eben geformt sein. Es ist ausreichend, wenn sie jeweils zumindest einen Bereich aufweisen welcher mit dem anderen Bereich des jeweiligen anderen Abschnitts den entsprechenden Winkel ausbilden.

Insbesondere dient der erste Abschnitt der bereichsweisen Verkleidung der Kraftfahrzeugsäule entgegen der Fahrtrichtung des das Verkleidungssystem aufweisenden Kraftfahrzeugs in Richtung auf den Fahrzeuginnenraum. Er befindet sich im Blickfeld von im Fahrzeuginnenraum sitzenden Personen seitlich neben der Instrumententafel. Der zweite Abschnitt kann entlang der Fahrzeuglängsrichtung, also der Fahrtrichtung, oder von dieser abweichend derart schräg, dass er mit einer Komponente seiner Erstreckungsrichtung in Richtung auf die Mittellängsachse des Fahrzeugs weist, verlaufen. Typischerweise erstreckt er sich bis unterhalb der Instrumententafel. Insbesondere liegt eine Begrenzungskante des zweiten Abschnitts an der Unterseite bzw. Unterkante der Instrumententafel an bzw. ist minimal von dieser beabstandet.

Die Längserstreckung des Unterteils beschreibt diejenige Ausdehnung des Unterteils, in welchem es die größte Längenausdehnung aufweist. Sie ist bei bestimmungsgemäßer Anordnung im Kraftfahrzeug in einer Ebene angeordnet, welche parallel zur Längsachse sowie zur Hochachse des Fahrzeugs ausgerichtet ist. In Bezug zu einer Ebene, welche parallel zur Querachse sowie zur Hochachse des Fahrzeugs ausgerichtet ist, ist die Längserstreckung des Unterteils entlang der Fahrtrichtung betrachtet nach hinten geneigt oder im Wesentlichen vertikal ausgerichtet.

Der erste Abschnitt ist im Wesentlichen entlang der Fahrzeugquerrichtung ausgerichtet. Zum Beispiel verläuft eine durch eine Oberfläche des ersten Abschnitts definierte Ebene mit einer Komponente ihrer Erstreckungsrichtung im Wesentlichen parallel zur Fahrzeugquerrichtung. Insbesondere weisen die jeweiligen Anlagebereiche des ersten und zweiten Mitteilteils zu den Abschnitten des Unterteils korrespondierende Abschnitte auf, sodass eine Begrenzungskante des jeweiligen Mittelteils und die Begrenzungskante des Unterteils im bestimmungsgemäß montierten Zustand einen Winkel ausbildend aneinander anliegen bzw. minimal voneinander beabstandet positioniert sind. Die Mitteilteile weisen im Bereich des jeweiligen Anlagebereichs, also an ihrer Unterseite, insbesondere einen erweiterten Querschnitt bzw. eine größere Breite auf als in den darüber liegenden Bereichen.

Diese Ausgestaltung bringt den Vorteil, dass das Unterteil bis unterhalb der Instrumententafel verläuft und dort einen optisch ansprechenden Übergang frei von Spalten realisiert.

Eine weitere Ausgestaltung des Verkleidungssystems ist dadurch gekennzeichnet, dass der zweite Abschnitt des Unterteils eine Begrenzungskante aufweist, wobei die Begrenzungskante in Bezug zur Schnittebene zumindest bereichsweise in einem Winkel β zwischen 20° und 60°, insbesondere zwischen 30° und 50°, angeordnet ist.

Beispielsweise liegt β bei ca. 45°. Insbesondere ist die Begrenzungskante bei bestimmungsgemäßer Montage in einem Kraftfahrzeug oben angeordnet, sodass sie die Unterseite bzw. Unterkante der Instrumententafel kontaktiert bzw. minimal beabstandet von dieser angeordnet ist. Mit anderen Worten verläuft die Oberkante des bis unter die Instrumententafel ragenden zweiten Abschnitts des Unterteils schräg nach oben.

Dies bringt den Vorteil mit sich, dass einerseits ein noch ansprechenderes Fugenbild erreichbar ist, da der Übergang zwischen den Bauteilen im nicht sichtbaren Bereich unterhalb der Instrumententafel endet. Zum anderen wird durch die schräge Oberkante der Einbau des Unterteils erleichtert, da das Unterteil auf diese Weise besonders einfach unter die bereits montierte Instrumententafel bringbar ist.

Ein zweiter Aspekt der Erfindung ist ein Verfahren zur Herstellung einer verkleideten Kraftfahrzeugkarosserie mit den Merkmalen des Anspruchs 5.

Die Erfindung wird im Folgenden anhand der in den beiliegenden Zeichnungen dargestellten Ausführungsbeispiele erläutert.

Es zeigen
Fig. 1: eine perspektivische Ansicht eines aus dem Stand der Technik bekannten Verkleidungssystems im montierten Zustand,
Fig. 2: eine perspektivische Ansicht eines weiteren aus dem Stand der Technik bekannten Verkleidungssystems im montierten Zustand,
Fig. 3: eine perspektivische Ansicht eines Zwischenstandes bei der Entwicklung des erfindungsgemäßen Verkleidungssystems im montierten Zustand,
Fig. 4: eine perspektivische Ansicht eines erfindungsgemäßen Verkleidungssystems,
Fig. 5: eine perspektivische Ansicht eines erfindungsgemäßen Verkleidungssystems im montierten Zustand, sowie
Fig. 6: eine Ausgestaltung des erfindungsgemäßen Verkleidungssystems 10 für ein Rechtslenker-Kraftfahrzeug.

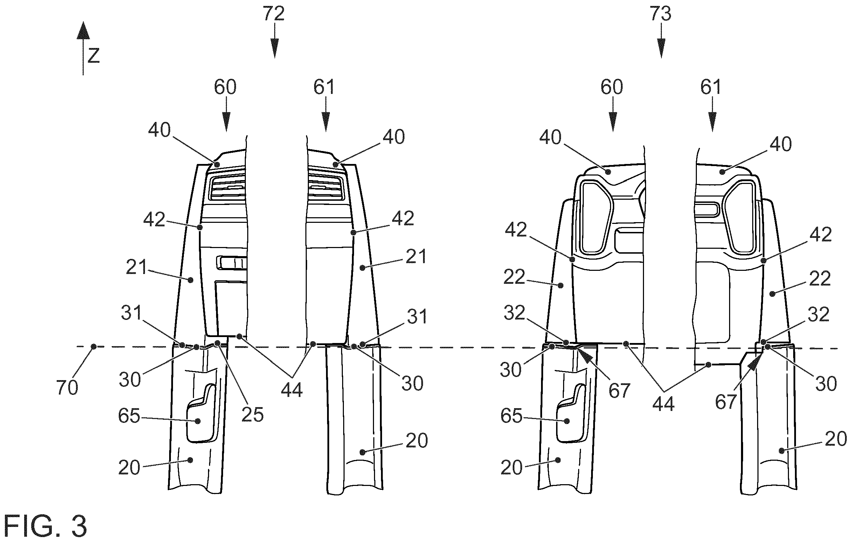

Auf die Figuren 1 und 2 wurde bereits bei der Würdigung des Standes der Technik eingegangen. Figur 3 zeigt eine erste Konfiguration 72 und eine zweite Konfiguration 73 erfindungsgemäßer Verkleidungssysteme, wobei die unterschiedlichen Konfigurationen 72 und 73 unterschiedliche Fahrzeuge beschreiben. Zur Steigerung der Übersichtlichkeit sind in den Figuren 1, 2, 3 und 5 jeweils die mittleren Bereiche der Instrumententafeln 40 ausgeschnitten und nur die jeweiligen seitlichen Übergangsbereiche zwischen den Instrumententafeln 40 und den entsprechenden Teilen der Verkleidungssysteme 10 an den rechten und linken Seiten der Instrumententafel 40 dargestellt. Die z-Richtung ist jeweils als Pfeil dargestellt.

Es ist ersichtlich, dass die unterschiedlichen Fahrzeuge verschieden ausgestaltete Instrumententafeln 40 aufweisen. Entsprechend sind das erste Mittelteil 21 sowie das zweite Mittelteil 22 unterschiedlich ausgeprägt. Gemeinsam ist hier hingegen die Ausgestaltung der jeweiligen Unterteile 20, die in beiden Konfigurationen 72, 73 identisch sind. Der Anlagebereich 30 des Unterteils 20, der an dessen Oberkante angeordnet ist, befindet sich somit in beiden Konfigurationen 72, 73 auf dem Höhenniveau der gemeinsamen Trennfuge 70, welches hier auch als z-Fuge bezeichnet wird. In beiden Konfigurationen 72, 73 umfasst das Unterteil 20 auf der Fahrerseite 60 jeweils einen Motorhaubenöffner 65 und entsprechenden Anschluss an den Fußraumboden.

In der ersten Konfiguration 72 ist ersichtlich, dass die jeweiligen ersten Mittelteile 21 nach unten bis zum Höhenniveau der Trennfuge 70 geführt sind. Auf diese Weise kann ohne das Entstehen eines sichtbaren Spalts zwischen Unterteil 20 und erstem Mittelteil 21 das rechts und links unterschiedliche Höhenniveau der Unterkante 44 der Instrumententafel 40 ausgeglichen werden.

Auf der Fahrerseite 60 entsteht dadurch eine Lasche 25, welche einen unterhalb der Instrumententafel nach innen bzw. vorn ragenden zweiten Abschnitt des ersten Mittelteils 21 ausbildet. Der erste Abschnitt des ersten Mittelteils 21 ist links davon angeordnet und im Wesentlichen entlang der Fahrzeugquerrichtung, also parallel zu Blickebene, ausgerichtet.

In der zweiten Konfiguration 73 ist das Herunterführen der zweiten Mittelteile 22 bis auf Höhe der Trennfuge 70 bisher nicht erfolgt. Somit ist hier zwischen dem Anlagebereich 32 des zweiten Mittelteils 22 und dem Anlagebereich 30 des Unterteils 20 der Spalt 67 sichtbar, welchen es durch Anpassen der zweiten Mittelteile 22 zu schließen gilt.

Die hier dargestellten Konfigurationen 72, 73 sind beispielhafte Darstellungen, die sich auf Linkslenker beziehen. Selbstverständlich sind dieselben Darstellungen in einer in Bezug auf eine sich entlang der Fahrzeuglängs- und Fahrzeughochrichtung erstreckende Ebene gespiegelten Ausführung entsprechend für Rechtslenker möglich. In dem Fall wären die jeweiligen Unterteile 20, die gespiegelte Versionen der hier dargestellten Unterteile 20 oder anders ausgeführte Unterteile sein könnten, mit den jeweiligen ersten und zweiten Oberteilen 21, 22 kombinierbar.

Beispielweise könnte sich bei einer wie beschrieben gespiegelten Darstellung der ersten Konfiguration 72 eine Rechtslenker-Konfiguration ergeben, in welcher sich vom Unterteil 20 unterscheidende Rechtslenker-Unterteile mit sich wiederum vom ersten Oberteil 21 unterscheidenden ersten Rechtslenker-Oberteilen kombiniert werden und gemeinsam eine zumindest nahezu geschlossene Kontur ausbilden. Bei einer wie beschrieben gespiegelten Darstellung der zweiten Konfiguration 73 könnten die beschriebenen Rechtslenker-Unterteile aus der gespiegelten ersten Konfiguration 72 mit zweiten Rechtslenker-Oberteilen kombiniert werden, welche sich vom zweiten Oberteil 22 sowie vom ersten Rechtslenker-Oberteil unterscheiden. Hierbei wird ersichtlich, dass in manchen Konfigurationen für Rechtslenker sowie für Linkslenker unterschiedliche Mittelteile genutzt werden können und in anderen Konfigurationen für Rechtslenker sowie für Linkslenker die jeweiligen Mittelteile als Gleichteile ausgeführt sein können. Unabhängig davon ist eine Kombination mit jeweils unterschiedlichen Unterteilen, wie sie durch die Rechts- bzw. Linkslenkigkeit vorgegeben werden, möglich.

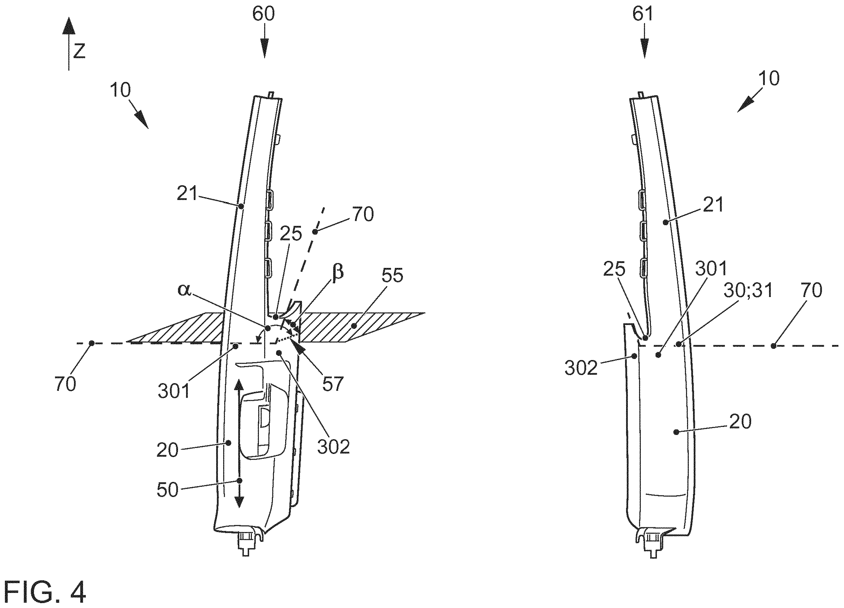

Figur 4 zeigt Teile zweier erfindungsgemäßer Verkleidungssysteme, nämlich jeweils ein erstes Mittelteil 21 und ein darunter angeordnetes Unterteil 20. Dies entspricht einer beispielhaften Ausgestaltung in einem Kraftfahrzeug zu montierender Verkleidungssysteme 10 gemäß des dritten Aspekts der Erfindung. Jeweilige zweite Mittelteile, die ebenso wie die hier dargestellten ersten Mittelteile 21 mit den jeweiligen Unterteilen 20 eine geschlossene Kontur ausbilden können, sind dabei in anderen Kraftfahrzeugen anzuordnen und deshalb nicht dargestellt.

Es ist ersichtlich, dass die A-Säulenabdeckungen durch die jeweils einen Knick aufweisenden Trennfugen 70 in die jeweiligen ersten Mittelteile 21 und die Unterteile 20 unterteilt sind. Das Höhenniveau der Trennfuge 70 ist dabei derart gewählt, dass die hier nicht dargestellte Instrumententafel ausschließlich vom jeweiligen ersten Mittelteil eingefasst ist und zwischen dem Unterteil 20 und der Instrumententafel keinerlei Kontakt besteht.

Die ersten Mittelteile 21 und die Unterteile 20 weisen jeweils komplementär zueinander ausgebildete Anlagebereiche 30, 31 auf. Sowohl fahrerseitig 60 als auch beifahrerseitig 61 bilden die jeweiligen, am erfindungsgemäßen Kraftfahrzeug anzuordnenden, Verkleidungssysteme 10 eine geschlossene Kontur aus. Dabei sind die jeweiligen ersten Mittelteile 21 sowie die Unterteile 20 miteinander verbunden, sodass die relative Position der jeweiligen Anlagebereiche 30, 31 in Bezug zueinander fixiert ist.

Die jeweiligen Unterteile 20 weisen jeweils zwei Abschnitte 301, 302 auf, die in einem Winkel α von etwa 100° zueinander ausgerichtet sind. Der Winkel α ist dabei in einer Schnittebene 55 gemessen, die senkrecht zur hier vertikal dargestellten Längserstreckung 50 des Unterteils 20 verläuft. Um den Winkel α deutlicher sichtbar zu machen, ist eine Projektion 57 des zweiten Abschnitts 302 auf die Schnittebene 55 eingezeichnet. Zwischen dem ersten Abschnitt 301, der im Wesentlichen entlang der Fahrzeugquerrichtung verläuft, sowie dem zweiten Abschnitt 302, der sich schräg unter die hier nicht dargestellte Instrumententafel erstreckt, ist eine abgerundete Kante ausgebildet.

Die obere Begrenzungskante des zweiten Abschnitts 302 verläuft in Bezug zur Schnittebene 55 schräg nach oben, nämlich in einem Winkel β von etwa 40°. Die jeweiligen ersten Mittelteile 21 weisen in ihren Bereichen oberhalb der zweiten Abschnitte 302 der darunter angeordneten Unterteile 20 jeweils eine Lasche 25 auf, die dazu eingerichtet ist, auch an den Unterseiten bzw. Unterkanten einer zwischen den Verkleidungssystemen 10 anzuordnenden A-Säulenverkleidung im Wesentlichen anzuliegen bzw. minimal davon beabstandet angeordnet zu sein. Auch hier können unterschiedliche Fugenarten realisiert werden, insbesondere mittels einer gestoßenen oder überlappenden Anordnung der jeweiligen Bauteile.

Zur Steigerung der Übersichtlichkeit sind die genannten Details lediglich für die Fahrerseite 60 dargestellt und beschrieben, gelten aber selbstverständlich analog für die Beifahrerseite 61.

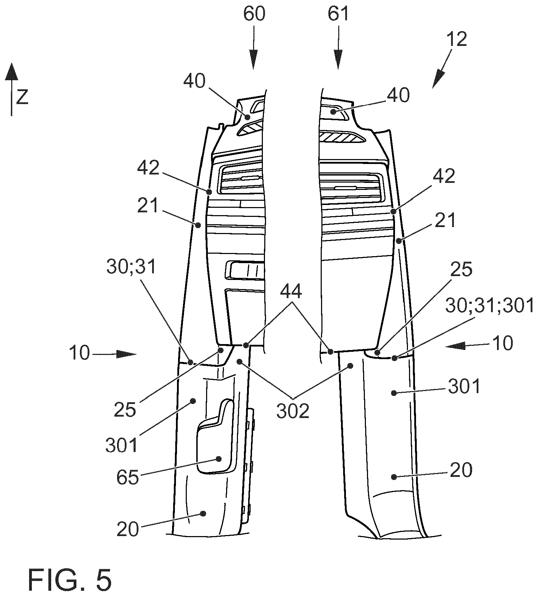

Figur 5 zeigt ein erfindungsgemäßes Verkleidungssystem 10 im eingebauten Zustand, welches durch Modifikation des aus dem Stand der Technik bekannten Verkleidungssystems aus Figur 2 hergestellt wurde. Auch hier ist ersichtlich, dass die jeweiligen ersten Mittelteile 21 im unteren Bereich eine Lasche 25 aufweisen. Diese sind Fortsetzungen der jeweiligen formmäßig komplementären Formbereiche der ersten Mittelteile 21 und der seitlichen Begrenzungen 42 der Instrumententafel 40. Mit diesen Formbereichen - die seitlichen Begrenzungen 42 der Instrumententafel 40 sind hier etwas konvex dargestellt - liegen die ersten Mittelteile 21 an der Instrumententafel 40 an. Neben den vertikalen ersten Bereichen der Formbereiche weisen diese auch winklig dazu angeordnete zweite Bereiche auf, welche die Unterkante 44 der Instrumententafel 40 nach unten hin überragen und als Bereiche der jeweiligen Laschen 25 an der Unterkante 44 anliegen.

Die Anlagebereiche 30, 31 des Unterteils 20 und des ersten Mittelteils 21 sowie die jeweiligen ersten Abschnitte 301 und zweiten Abschnitt 302 der ersten Mittelteile 21 sind analog zur Figur 4 ausgestaltet, auf welche hier verwiesen wird.

Es ist darauf hinzuweisen, dass etwaige Unterschiede in den Höhenniveaus der einzelnen Komponenten der Fahrerseite 60 sowie der Beifahrerseite 61 auf perspektivische Verzerrungen der gewählten Darstellung zurückzuführen sind.

Auf die hier gezeigte Weise kann das Unterteil 20 in verschiedenen Fahrzeugen als Gleichteil ausgeführt werden, obwohl unterschiedliche Instrumententafeln 40 genutzt werden. Diese unterscheiden sich etwa in ihrer Breite, ihrer Höhe und / oder in der Höhenpositionen ihrer Unterkanten 44 im bestimmungsgemäß montierten Zustand, auch als z-Niveau bezeichnet.

Mit anderen Worten ist das Unterteil 20 modular für Instrumententafeln 40 unterschiedlicher Ausgestaltung nutzbar, da die jeweiligen Unterschiede durch das entsprechende Mittelteil 21, 22 ausgleichbar sind und das Mittelteil 21, 22 mit unterschiedlichen Unterteilen 20 verwendbar ist.

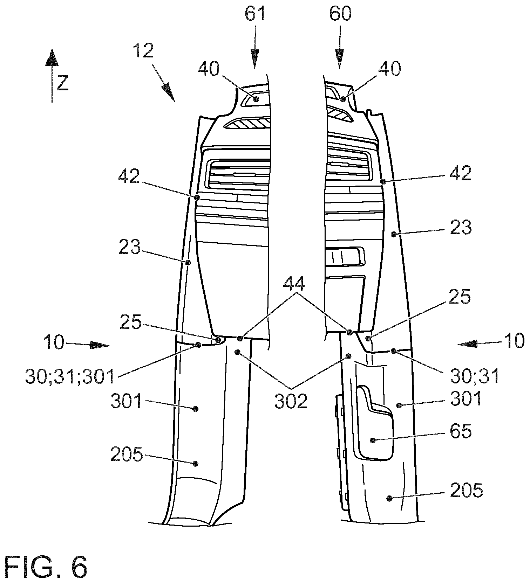

Figur 6 zeigt eine analoge Ausgestaltung des erfindungsgemäßen Verkleidungssystems 10 für einen Rechtslenker. Die Darstellung aus Figur 5 ist in Bezug auf eine sich entlang der Fahrzeuglängs- und Fahrzeughochrichtung erstreckende Ebene gespiegelt. Auf der rechten Seite ist somit die Fahrerseite 60 und auf der linken Seite die Beifahrerseite 61 angeordnet.

Dies wird unter anderem daran deutlich, dass sich auf der rechten Seite der Motorhaubenöffner 65 befindet.

Die Rechtslenker-Mittelteile 23 sind jeweils in Bezug zur beschriebenen Ebene gespiegelte Versionen der ersten Mittelteile 21 aus Figur 5. Die hier gezeigten Rechtslenker-Unterteile 205 sind in der hier gezeigten Ausgestaltung entsprechend gespiegelte Versionen der Unterteile 20 aus Figur 5. Es können jedoch genauso gut alternativ ausgestaltete Rechtslenker-Unterteile 205 sein. Es wird somit deutlich, dass unterschiedliche Unterteile mit denselben Mittelteilen, hier mit denselben Rechtslenker-Mittelteilen 23, kombinierbar sind.

**Bezugszeichenliste**

| | |
|---|---|
| Verkleidungssystem | 10 |
| Bauteilsystem | 12 |
| Unterteil | 20 |
| Rechtslenker-Unterteil | 205 |
| Erstes Mittelteil | 21 |
| Zweites Mittelteil | 22 |
| Rechtslenker-Mittelteil | 23 |
| Lasche | 25 |
| Anlagebereich des Unterteils | 30 |
| Erster Abschnitt | 301 |
| Zweiter Abschnitt | 302 |
| Anlagebereich des ersten Mittelteils | 31 |
| Anlagebereich des zweiten Mittelteils | 32 |
| Instrumententafel | 40 |
| Begrenzung der Instrumententafel | 42 |
| Unterkante der Instrumententafel | 44 |
| Längserstreckung des Unterteils | 50 |
| Schnittebene | 55 |
| Projektion | 57 |
| Fahrerseite | 60 |
| Beifahrerseite | 61 |
| Motorhaubenöffner | 65 |
| Spalt | 67 |
| Trennfuge | 70 |
| Erste Konfiguration | 72 |
| Zweite Konfiguration | 73 |
| Oberes Höhenniveau | 75 |
| Mittleres Höhenniveau | 76 |
| Unteres Höhenniveau | 77 |
| Winkel | α |
| Winkel | β |
| Z-Richtung | z |

## Patentansprüche

1. Verkleidungssystem (10) zum zumindest bereichsweisen Verkleiden einer Kraftfahrzeugsäule, insbesondere einer A-Säule, umfassend ein Unterteil (20) und ein erstes Mittelteil (21), wobei das Unterteil (20) und das erste Mittelteil (21) komplementär zueinander ausgebildete Anlagebereiche (30, 31) aufweisen und derart in Bezug zueinander positionierbar sind, dass das Unterteil (20) und das erste Mittelteil (21) gemeinsam eine zumindest nahezu geschlossene Kontur ausbilden, **dadurch gekennzeichnet, dass** das Verkleidungssystem (10) ein zweites Mittelteil (22) umfasst, welches sich vom ersten Mittelteil (21) in Form und/oder Größe unterscheidet und welches einen zum Anlagebereich (30) des Unterteils (20) komplementär ausgebildeten Anlagebereich (32) aufweist, wobei das Unterteil (20) und das zweite Mittelteil (22) derart in Bezug zueinander positionierbar sind, dass sie gemeinsam eine zumindest nahezu geschlossene Kontur ausbilden, wobei das Unterteil (20) unter dem Mittelteil (21) anzuordnen ist.

2. Verkleidungssystem (10) nach dem vorhergehenden Anspruch, **dadurch gekennzeichnet, dass** das Unterteil (20) und ein jeweiliges Mittelteil (21, 22) derart ausgestaltet sind, dass das Unterteil (20) mit jeweils einem des ersten Mittelteils (21) und des zweiten Mittelteils (22) derart verbunden oder verbindbar ist, dass die jeweiligen komplementären Anlagebereiche im Wesentlichen aneinander anliegen oder minimal voneinander beabstandet sind.

3. Verkleidungssystem (10) nach einem der vorhergehenden Ansprüche, **dadurch gekennzeichnet, dass** das Unterteil (20) zwei in einem Winkel α zwischen 80° und 135°, insbesondere zwischen 90° und 120°, zueinander ausgerichtete Abschnitte (301, 302) umfasst, wobei der Winkel α in einer senkrecht zu einer Längserstreckung (50) des Unterteils (20) angeordneten Schnittebene (55) gemessen wird, sodass bei bestimmungsgemäßer Anordnung des Unterteils (20) in einem Kraftfahrzeug ein erster Abschnitt (301) im Wesentlichen entlang der Fahrzeugquerrichtung ausgerichtet ist und ein zweiter Abschnitt (302) sich mit einer Komponente seiner Erstreckungsrichtung entlang der Fahrzeuglängsrichtung erstreckt.

4. Verkleidungssystem (10) nach Anspruch 3, **dadurch gekennzeichnet, dass** der zweite Abschnitt (302) des Unterteils (20) eine Begrenzungskante aufweist, wobei die Begrenzungskante in Bezug zur Schnittebene (55) zumindest bereichsweise in einem Winkel β zwischen 20° und 60°, insbesondere zwischen 30° und 50°, angeordnet ist.

5. Verfahren zur Herstellung einer verkleideten Kraftfahrzeugkarosserie, wobei ein Verkleidungssystem (10) gemäß einem der Ansprüche 1 bis 4 zum zumindest bereichsweisen Verkleiden einer Kraftfahrzeugsäule, insbesondere einer A-Säule, bereitgestellt wird, wobei weiterhin eine Kraftfahrzeugkarosserie mit einer Kraftfahrzeugsäule, insbesondere einer A-Säule, bereitgestellt wird und das Unterteil (20) sowie ein Mittelteil (21, 22) des Verkleidungssystems (10) derart an der Kraftfahrzeugkarosserie angeordnet werden, dass sie die Kraftfahrzeugsäule jeweils bereichsweise verkleiden, wobei insbesondere die Anordnung des Mittelteils (21, 22) nach der Anordnung des Unterteils (20) erfolgt.

## Claims

1. Cladding system (10) for at least partially cladding a motor vehicle pillar - in particular, an A-pillar - comprising a lower part (20) and a first middle part (21), wherein the lower part (20) and the first middle part (21) have contact regions (30, 31) designed to be mutually complementary and can be positioned in relation to one another such that the lower part (20) and the first middle part (21) together form an at least nearly closed contour,
**characterized in that** the cladding system (10) comprises a second middle part (22) which differs from the first middle part (21) in shape and/or size and which has a contact region (32) which is designed to be complementary to the contact region (30) of the lower part (20), wherein the lower part (20) and the second middle part (22) can be positioned in relation to one another in such a way that they together form an at least nearly closed contour, wherein the lower part (20) is to be arranged below the middle part (21).

2. Cladding system (10) according to the preceding claim, **characterized in that** the lower part (20) and a respective middle part (21, 22) are designed in such a way that the lower part (20) is connected or can be connected to in each case one of the first middle part (21) and second middle part (22) in such a way that the respective complementary contact regions are substantially adjacent to one another or are at a minimum distance from one another.

3. Cladding system (10) according to one of the preceding claims, **characterized in that** the lower part (20) comprises two sections (301, 302) which are aligned with respect to one another at an angle α of between 80° and 135°, and in particular between 90° and 120°, wherein the angle α is measured in a sectional plane (55) arranged to be perpendicular to a longitudinal extension (50) of the lower part (20) so that, given arrangement the lower part (20) as intended in a motor vehicle, a first section (301) is oriented substantially along the transverse direction of the vehicle, and a second section (302) extends with a component of its extension direction along the longitudinal direction of the vehicle.

4. Cladding system (10) according to claim 3, **characterized in that** the second section (302) of the lower part (20) has a boundary edge, wherein the boundary edge is arranged at an angle β of between 20° and 60°, and in particular between 30° and 50°, in relation to the sectional plane (55), at least in regions.

5. Method for producing a clad motor vehicle body, wherein a cladding system (10) according to one of claims 1 through 4 is provided for cladding a motor vehicle pillar - in particular, an A-pillar - at least in regions, wherein a motor vehicle body is furthermore provided with a motor vehicle pillar - in particular, an A-pillar - and the lower part (20) and a middle part (21, 22) of the cladding system (10) are arranged on the motor vehicle body such that they in each case cover the motor vehicle pillar in regions, wherein, in particular, the arrangement of the middle part (21, 22) takes place after the arrangement of the lower part (20).

## Revendications

1. Système d'habillage (10) servant à l'habillage d'au moins une partie d'un montant de véhicule automobile, en particulier un montant A, comprenant une partie inférieure (20) et une première partie centrale (21), la partie inférieure (20) et la première partie centrale (21) présentant des zones d'appui (30, 31) complémentaires l'une de l'autre et pouvant être positionnées l'une par rapport à l'autre de telle manière que la partie inférieure (20) et la première partie centrale (21) forment ensemble un contour au moins à peu près fermé,
**caractérisé en ce que** le système d'habillage (10) comprend une deuxième partie centrale (22) différente de la première partie centrale (21) par sa forme et/ou sa dimension et qui présente une zone d'appui (32) complémentaire de la zone d'appui (30) de la partie inférieure (20), la partie inférieure (20) et la deuxième partie centrale (22) pouvant être positionnées l'une par rapport à l'autre de telle manière qu'elles forment ensemble un contour au moins à peu près fermé, la partie inférieure (20) étant disposée en dessous de la partie centrale (21).

2. Système d'habillage (10) selon la revendication précédente, **caractérisé en ce que** la partie inférieure (20) et une partie centrale (21, 22) respective sont réalisées de telle manière que la partie inférieure (20) est ou peut être connectée à respectivement une de la première partie centrale (21) et de la deuxième partie centrale (22) de telle manière que les zones d'appui complémentaires respectives sont essentiellement en appui l'une contre l'autre ou espacées au minimum l'une de l'autre.

3. Système d'habillage (10) selon l'une quelconque des revendications précédentes, **caractérisé en ce que** la partie inférieure (20) comprend deux sections (301, 302) orientées l'une par rapport à l'autre à un angle α situé entre 80° et 135°, en particulier entre 90° et 120°, l'angle α étant mesuré dans un plan de coupe (55) disposé perpendiculairement à une extension longitudinale (50) de la partie inférieure (20), de sorte que, lors de la disposition conforme à l'usage prévu de la partie inférieure (20) dans un véhicule automobile, une première section (301) est orientée essentiellement le long de la direction transversale du véhicule et une deuxième section (302) s'étend avec un composant de sa direction d'extension le long de la direction longitudinale du véhicule.

4. Système d'habillage (10) selon la revendication 3, **caractérisé en ce que** la deuxième section (302) de la partie inférieure (20) présente un bord de délimitation, le bord de délimitation étant disposé par rapport au plan de coupe (55) au moins par sections à un angle β situé entre 20° et 60°, en particulier entre 30° et 50°.

5. Procédé pour la fabrication d'une carrosserie de véhicule automobile munie d'un habillage, un système d'habillage (10) selon l'une quelconque des revendications 1 à 4 étant fourni pour le revêtement au moins par sections d'un montant de véhicule automobile, en particulier d'un montant A, une carrosserie de véhicule automobile comprenant un montant de véhicule automobile, en particulier un montant A, étant en outre fournie et la partie inférieure (20) ainsi qu'une partie centrale (21, 22) du système d'habillage (10) étant disposées de telle manière sur la carrosserie de véhicule automobile qu'elles revêtent respectivement par sections le montant de véhicule automobile, la disposition de la partie centrale (21, 22) étant en particulier effectuée après la disposition de la partie inférieure (20).
